# EUROPEAN PATENT SPECIFICATION

(11) **EP 1 255 923 B1**
(45) Date of publication and mention of the grant of the patent: **12.04.2006**
(21) Application number: 01905536.7
(22) Date of filing: 09.02.2001
(51) Int. Cl.: F02D 19/08, F02B 7/00

(54) **METHOD AND APPARATUS FOR DUAL FUEL INJECTION INTO AN INTERNAL COMBUSTION ENGINE**
EINSPRITZVERFAHREN UND VORRICHTUNG FÜR ZWEI BRENNSTOFFE IN EINER BRENKRAFTMASCHINE
PROCEDE ET DISPOSITIF D'INJECTION DOUBLE DE CARBURANT DANS UN MOTEUR A COMBUSTION INTERNE

(30) Priority: 11.02.2000 US 503034; 17.10.2000 US 690503
(43) Date of publication of application: 13.11.2002
(73) Proprietor: Westport Research Inc., Vancouver, British Columbia V6P 6P2 (CA)
(72) Inventor: OUELLETTE, Patric, Vancouver, British Columbia V6N 2P9 (CA); DOUVILLE, Brad, West Vancouver, British Columbia V7V 2P6 (CA); ANCIMER, Richard, Vancouver, British Columbia V5L 4P9 (CA); LI, Guowei, Vancouver, British Columbia V6P 4E6 (CA); MUNSHI, Sandeep, Vancouver, British Columbia V6P 6H2 (CA)
(74) Representative: Campbell, Arlene
(86) International application number: PCT/CA2001/000161
(87) International publication number: WO 2001/059280

(56) References cited:
- EP-A- 0 964 139
- EP-A- 0 967 372
- DE-A- 3 442 628
- US-A- 5 119 780
- BAKER: "TWO-STAGE INJECTION REDUCES DIESEL CETANE REQUIREMENTS" AUTOMOTIVE ENGINEERING,US,SOCIETY OF AUTOMOTIVE ENGINEERS. WARRENDALE, vol. 91, no. 5, 1 May 1983 (1983-05-01), pages 35-38, XP002102996 ISSN: 0098-2571

## Description

### Field of the Invention

The present invention relates to a technique for dual fuel injection into the combustion chamber of an internal combustion engine. More specifically, the present invention relates to a dual fuel injection technique suitable for application in the internal combustion engines of cars, trucks, buses, locomotives, ships and other forms of transportation, as well as in engines related to energy production and industrial applications .

### Background of the Invention

The conversion of diesel engines into natural gas operation has been an aspiration of the internal combustion engine industry for a period of time. Natural gas is a clean burning fuel (relative to diesel), which means that when an engine substitutes natural gas fuel for diesel fuel, the engine may operate with reduced emission levels of both nitrogen oxides (NOₓ) and particulate matter (PM).

A known method for converting diesel engines to natural gas operation is called dual fuel operation. Typically, dual fuel engines mix natural gas with the intake air prior to introducing of the air/natural gas mixture into the engine cylinder (a process known in the art as fumigation). The homogeneous air/natural gas mixture is thus introduced into the piston cylinder during the intake stroke. During the compression stroke, the pressure and temperature of the homogeneous mixture are increased. Near the end of the compression stroke, a small quantity of pilot diesel fuel is used to ignite the air/natural gas mixture. The advantage of employing a homogeneous mixture of air and natural gas is that the combustion fuel to air ratio (F/A ratio) can be controlled so as to burn in a lean homogeneous manner and achieve lower NOx emissions and lower particulate matter, compared to equivalent diesel-fueled engines.

However, this dual fuel method has two main disadvantages. The first main disadvantage is encountered at high load engine operating conditions; when the elevated temperature and pressure in the piston cylinder during the compression stroke makes the air/natural gas mixture susceptible to "knocking". Knocking is an uncontrolled combustion process resulting in a very high rate of heat release, which causes rapid fluctuations in combustion chamber pressure or a combustion chamber pressure that is itself large enough to damage the piston, and associated engine components. A few measures for reducing the risk of knocking include lowering the compression ratio of the engine or limiting the power and torque output, but these measures cause a corresponding reduction in the engine's cycle efficiency (that is, not as much power is available from each piston stroke). The second main disadvantage is that under low load engine operating conditions, the mixture of fuel and air becomes too lean to support stable combustion via flame propagation and results in incomplete combustion or misfiring. The intake air flow can be throttled to maintain a F/A ratio above the flammability limit, but this adversely affects the engine efficiency.

Recently, a different type of dual fuel combustion engine, herein referred to as a "high pressure direct injection" (HPDI) gas engine has become known in the art. Similar to the conventional dual fuel method described above, HPDI gas engines burn a large quantity of gaseous fuel, yielding an improvement over diesel-fueled engines by reducing the emission levels ofNOx and particulate matter. In addition, HPDI gas engines have been demonstrated to achieve the same combustion efficiency, power and torque output as state of the art diesel-fueled engines. The operational principle underlying HPDI gas engines is that two fuels are injected under pressure into the chamber near the end of the compression stroke. According to one method, a small amount of "pilot fuel" (typically diesel) is injected into the cylinder immediately followed by a more substantial quantity of gaseous fuel. The pilot fuel readily ignites at the pressure and temperature within the cylinder at the end of the compression stroke, and the combustion of the pilot fuel initiates the combustion of the gaseous fuel that might otherwise be difficult to ignite. Known HPDI gas engines have no premixture of fuel and air; as a result, they operate in a "diffusion" combustion mode, rather than a premixed combustion mode. In a diffusion combustion mode, the bulk of the combustion is believed to occur in a local near-stoichiometric reaction zone, where the temperature and resulting NOx formation are relatively high (compared to the temperature and resulting NOx formation caused by a lean burn premixed combustion).

EP 0 967 372 A2, December 29,1999, Caterpillar Inc. discloses a method of operating an engine assembly (10) having a cylinder assembly (26) which defines a combustion chamber (46) is disclosed- The method includes the steps of performing an intake stroke of the cylinder assembly (26) and advancing a conditioning fuel into the combustion chamber (46) during the intake stroke performing step. The method further includes the steps of advancing a gaseous fuel into the combustion chamber (46) during the intake stroke performing step and performing a compression stroke of the cylinder assembly (26) after the intake stroke performing step. The method yet further includes the steps of advancing a pilot fuel into the combustion chamber (46) during the compression stroke performing step and combusting the pilot fuel in the combustion chamber (46) during the compression stroke performing step so as to ignite the conditioning fuel and the gaseous fuel. The gaseous fuel and the conditioning fuel are mixed in the combustion chamber (46) prior to the pilot fuel advancing step so as to facilitate ignition of the gaseous fuel in the combustion chamber (46),

### Summary of the Invention

An improved method is provided for introducing fuel into the combustion chamber of an operating internal combustion engine. The engine comprises at least one piston disposed within a cylinder. The fuel introduced into the combustion chamber comprises a main fuel and a pilot fuel that is more auto-ignitable than the main fuel. The method comprises:
(a) detecting a set of load conditions on the engine;
(b) employing a low load operating mode when a first predetermined set of load conditions is detected, the first predetermined set of load conditions corresponding to load conditions that exist when the desired ratio of the main fuel to air is less than a calibrated premixed combustion stability limit of a homogeneous mixture of the main fuel and intake charge, and employing a high load operating mode when a second predetermined set of load conditions is detected, wherein at an operable given engine speed as measured in the form of crankshaft revolutions per minute (RPM), the second set of load conditions corresponds an engine load that is greater than the engine load corresponding to the first predetermined set of load conditions;
(c) in the low load operating mode, introducing the pilot fuel and the main fuel into the combustion chamber when the cylinder is pressurized, when the piston is at or near top dead center; and
(d) in the high load operating mode, introducing the pilot fuel and the main fuel into the combustion chamber in three sequential stages, whereby a first portion of the main fuel is introduced in a first stage during at least one of an intake stroke and a compression stroke, the pilot fuel is introduced in a second stage during the compression stroke so that it ignites when the piston is at or near top dead center, and a second portion of the main fuel is introduced in a third stage.

In a preferred method, the low load operating mode further comprises introducing the pilot fuel during a compression stroke in a timed manner such that the pilot fuel ignites when the piston is at or near top dead center, and the main fuel is introduced sequentially after the pilot fuel.

When at least a portion of the main fuel is introduced sequentially after the pilot fuel (late injection), according to the present preferred method, the late injected portion of the main fuel is introduced within zero and ninety degrees of crankshaft rotation after the introduction of the pilot fuel.

When at least a portion of the main fuel is introduced before the pilot fuel (early-injection), in a preferred method the introduction of the early-injected main fuel is completed before the second stage pilot fuel introduction commences. It is generally desirable to introduce the early-injected main fuel earlier rather than later since this affords a greater opportunity for the early-injected main fuel to mix with the intake air to form a homogeneous mixture. Accordingly, in a preferred method, the first stage, early-injected, main fuel introduction occurs during the intake stroke. In an alternate method, the first stage, early injected, main fuel introduction occurs when the piston is at or near bottom dead center near the beginning of the compression stoke.

In the high load operating mode, the second stage pilot fuel introduction occurs during the compression stroke when the piston is at or near top dead center. Similar to the low load operating mode, it is desirable to introduce the pilot fuel during the compression stroke and for pilot fuel injection to be timed so that the pilot fuel ignites when the piston is at or near top dead center.

In one embodiment of the present method, when the high load operating mode is selected, the second stage pilot fuel introduction continues when the third stage main fuel introduction commences, such that there is an overlap in the second the third stages. Alternatively, the second and third stages may commence simultaneously, with the third stage being longer in duration. However, in the preferred method, the commencement of the second and third stages is sequential and spaced by at least five degrees of crankshaft rotation.

The preferred method may further comprise:
(e) employing an intermediate load operating mode when a third predetermined set of load conditions is detected, wherein at any given engine speed, the third predetermined set of load conditions corresponding to an engine load that is greater than the engine load corresponding to the first predetermined set of load conditions, and, at the same speed, less than the engine load corresponding to the second predetermined set of load conditions;
wherein the intermediate load operating mode comprises sequential introduction of main fuel and pilot fuel into the combustion chamber, whereby the main fuel is introduced into the combustion chamber before the pilot fuel, the pilot fuel is introduced during the compression stroke, and the introduction of pilot fuel is timed such that the pilot fuel ignites substantially when the piston is at or near top dead center.

When an intermediate load operating mode is employed, the early injected main fuel is introduced in a manner so that a substantial quantity of the main fuel intermixes with air within the cylinder prior to combustion. Preferably, the main fuel and the air become a homogenous mixture. To provide more time and opportunity for the main fuel and air to mix, in a preferred method the main fuel is introduced into the combustion chamber during the intake stroke. In this way, the main fuel and air are mixed during the remainder of the intake stroke and the entire duration of the compression stroke.

The boundary between the intermediate load operating mode and the high load operating mode is preferably defined by a calibrated knock limit.

When the high load operating mode is employed, the quantity of the main fuel introduced during the third stage may be controlled depending upon the detected set of load conditions. For example, the quantity of main fuel introduced during the third stage may be increased when the detected set of load conditions indicates that engine load is increasing. To reduce NOₓ and particulate matter emissions, when more fuel is needed to satisfy the required engine load, it is generally preferable to increase the quantity of main fuel instead of increasing the quantity of pilot fuel.

In a preferred method the quantity of the main fuel introduced during the first stage is variable and dependent upon the detected set of load conditions. The engine preferably has a calibrated knock limit and the quantity of main fuel introduced is preferably controlled during the first stage to provide lean burn premixed combustion and to maintain a main fuel to air ratio that is less than the knock limit.

The value of the knock limit may change depending upon engine operating conditions (such as engine speed, intake manifold charge pressure or temperature), and when the engine operating condition changes, it may be necessary to adjust the quantity of main fuel introduced during the first stage to prevent knocking. The knock limit may also change when the main fuel composition changes. For example, the composition and quality of natural gas may vary in different parts of the world, or even within the same part of the world. When the composition and quality of the fuel is variable, there may be a series of calibration values that depend upon the fuel composition and quality. The quantity of main fuel that is introduced during the first stage may then be adjusted in accordance with the calibration values determined for the present main fuel composition and quality.

In an alternative embodiment, to simplify the fuel injection control when the high load operating mode is selected, the quantity of main fuel introduced during the first stage may be held constant. In this embodiment, to protect against knocking, a fixed quantity of main fuel is selected that provides a first stage main fuel to air ratio that is less than a calibrated knock limit at all engine operating conditions and for the broad range of anticipated compositions and qualities of main fuel. That is, in this embodiment, there may be load conditions when the main fuel to air ratio is much less than the knock limit.

In the preferred method, detecting the set of load conditions on the engine comprises measuring engine speed and engine throttle position. Additional parameters may also be optionally monitored and considered when determining fuel requirements and injection timing. For example, the method may further comprise one or more of the following:
(1) measuring engine intake manifold charge temperature;
(2) measuring engine coolant temperature;
(3) measuring intake manifold charge pressure;
(4) measuring air flow into the combustion chamber; and
(5) sensing knocking within the cylinder.

In one embodiment of the method, main fuel early injection is accomplished by employing fumigation to premix the main fuel with intake air prior to being introduced into the combustion chamber. This method requires an additional fuel injector associated with an external vessel for introducing the main fuel into the intake air stream. For example, such a fuel injector could be located in the intake air manifold upstream of the intake valve. Fumigation could be used for introducing the main fuel in the intermediate load operating mode or in the first stage of the high load operating mode.

The method may further comprise defining a predetermined main fuel to pilot fuel ratio (Fg/Fp) dependent upon the detected set of load conditions on the engine and introducing quantities of main fuel and pilot fuel to the combustion chamber in accordance with the predetermined Fg/Fp ratio. The Fg/Fp ratio may be determined, for example, empirically for different sets of load conditions. Once the desired quantity of main fuel Fg is determined, in the high load operating mode, the quantity of main fuel introduced in the first stage (F_{fg}) is limited to prevent the fuel to air ratio (F_{fg}/A) from exceeding a calibrated knock limit.

A control system is preferably employed to control the timing for introducing the main fuel and the pilot fuel into the combustion chamber based upon the detected set of load conditions.

In a preferred method, the main fuel is gaseous, and preferably selected from the group consisting of gaseous hydrocarbons and hydrogen. For example, the gaseous hydrocarbons may be natural gas, liquefied petroleum gas, or blends of gaseous fuels. The pilot fuel may be a liquid, and is preferably selected from the group consisting of liquid hydrocarbons, such as, for example, diesel fuel and dimethylether (DME), and blends of liquid fuels.

The engine employing the disclosed method may provide power to a vehicle, such as, for example, a car, a truck, a ship or a submarine. However, the engine may also be used as part of a stationary power plant, for example, to provide mechanical power or to generate electricity.

The preferred method of introducing fuel into a combustion chamber of an operating internal combustion engine may further comprise operating in a special operating mode during predetermined special operating conditions when it is not possible to efficiently combust a premixture of fuel and air. For example, special conditions may comprise engine start up and engine idling conditions. In the special operating mode the main fuel is introduced into the combustion chamber sequentially after the introduction of the pilot fuel. In one embodiment, the special operating mode is the same as the low load operating mode.

The preferred method may further comprise increasing the intake manifold charge temperature above ambient temperature when the high load operating mode is employed. For example, exhaust gas recirculation may be employed to increase the temperature in the intake manifold charge. Increasing the intake manifold charge temperature above ambient temperature has the effect of facilitating the combustion of fuel that is premixed with the intake air. Accordingly, the method may further comprise increasing the intake manifold charge temperature above ambient temperature when the intermediate load operating mode is employed.

In an alternative embodiment of the method the first predetermined set of load conditions correspond to load conditions that exist when the desired ratio of the main fuel to air is less than a calibrated flammability limit of a homogeneous mixture of the main fuel and intake air. Since the fuel to air ratio associated with the flammability limit is greater than or equal to that of the premixed combustion stability limit, in this embodiment, the low load operating mode is employed over a broader range of conditions.

An improved apparatus introduces fuel into the combustion chamber of an operating internal combustion engine having at least one cylinder with a piston. The fuel comprises a main fuel and a pilot fuel. The pilot fuel is more readily auto-ignitable than the main fuel. The apparatus further comprises:
(a) measuring devices for collecting operational data from the internal combustion engine, the measuring devices comprising a tachometer for measuring engine speed and a sensor for determining throttle position;
(b) an electronic control unit that receives the operational data and processes the data to compute a set of load conditions, the electronic control unit comprising memory for storing control sets of load conditions and predetermined operating modes for the control sets of load conditions, the electronic control unit matching the computed set of load conditions with the control sets of load conditions to select one of the predetermined operating modes;
(c) main fuel injector controlled by the electronic control unit to introduce the main fuel into the combustion chamber at times and in quantities determined by the electronic control unit in accordance with the predetermined operating modes and the set of load conditions; and
(d) a pilot fuel injector controlled by the electronic control unit to introduce the pilot fuel into the combustion chamber at times and in quantities determined by the electronic control unit in accordance with the predetermined operating modes and the set of load conditions;
wherein the predetermined operating modes comprise a low load operating mode and a high load operating mode. In the low load operating mode, the pilot fuel and the main fuel are introduced into the combustion chamber when the cylinder is pressurized. The high load operating mode comprises three stage sequential introduction of fuel into the combustion chamber, whereby a first portion of the main fuel is introduced in a first stage, the pilot fuel is introduced in a second stage, and a second portion of the main fuel is introduced in a third stage. The first stage is preferably temporally isolated from the second and third stages such that the first stage is completed before the second and third stages begin.

In a preferred embodiment of the apparatus, a dual fuel injector may be employed which integrates into a single device both the main fuel injector and the pilot fuel injector. The dual fuel injector may inject either one of the main fuel or pilot fuel independently of each other.

In an alternate embodiment of the apparatus, the apparatus further comprises an auxiliary injector for introducing at least a portion of the main fuel into the air induction system. The auxiliary injector may be located at any point in the air induction system. In this alternate embodiment, the main fuel may be introduced through the auxiliary injector when the main fuel to air ratio is higher than the premixed combustion stability limit (defined below). The portion of the main fuel that is introduced through the auxiliary injector has an opportunity to mix with the intake air prior to being introduced to the combustion chamber. Another advantage of this alternate embodiment is that the main fuel can be introduced through the auxiliary injector at low pressure thereby increasing efficiency by reducing the quantity of fuel that needs to be introduced directly into the combustion chamber at high pressure. When the engine comprises a plurality of pistons, a plurality of auxiliary injectors may be employed.

The measuring devices may further comprise one or more of the following: a probe for measuring the engine intake air temperature, a probe for measuring engine coolant temperature, a device for measuring the intake air boost pressure, a flowmeter for measuring air flow into the combustion chamber, and a sensor device for detecting pre-mature detonation within the combustion chamber.

When the apparatus comprises a sensor for detecting pre-mature detonation, when pre-mature detonation is detected, the electronic control unit may take action, such as reducing the quantity of the main fuel introduced in the first stage to prevent a re-occurrence.

Further advantages of the present dual fuel injection method and apparatus will become apparent when considering the drawings in conjunction with the detailed description.

### Brief Description of the Drawings

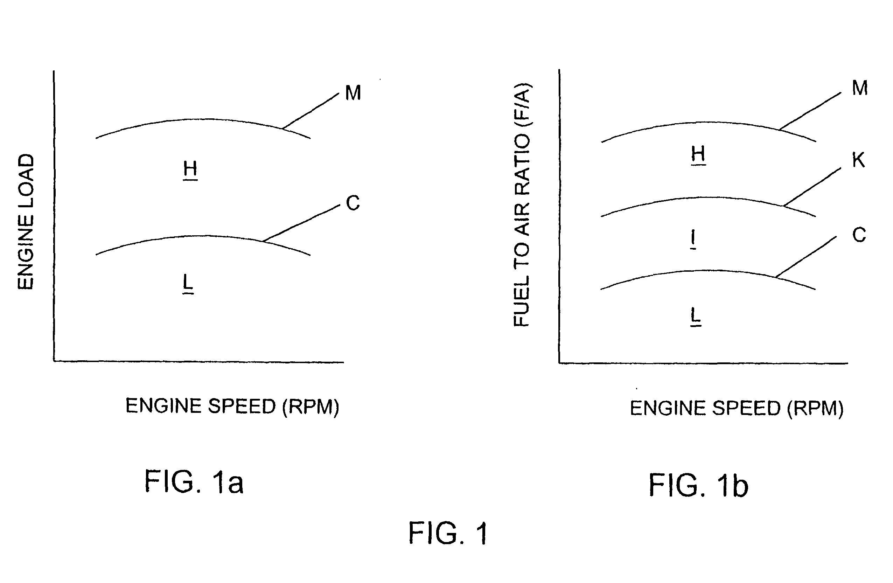

FIG. 1 shows two illustrative plots of how load conditions may be used to define a plurality of operating modes. In FIG. 1a, the horizontal axis represents engine speed, the vertical axis represents the load conditions and line C represents the premixed combustion stability limit, which separates the two different operating modes. Line M represents the maximum load limit for the engine. In FIG. 1b, the vertical axis represents the fuel to air ratio. Since the fuel to air ratio generally correlates to engine load, fuel to air ratio is used on the vertical axis of Figure 1b to show that parameters such as fuel to air ratio may be used as an indicator of engine load to determine the desired operating mode. Lines C and K separate the load conditions into three different operating modes. Line C again represents the premixed combustion stability limit and line K represents the knock limit. Line M again represents the maximum load limit for the engine.

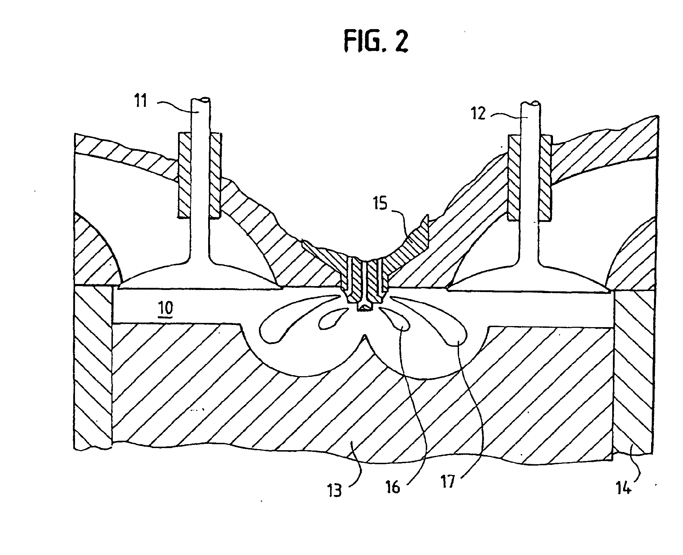

FIG. 2 is a partial cross section view of an engine combustion chamber that shows pilot fuel and a main fuel, both being injected into the combustion chamber when the piston is at or near top dead center under low load conditions.

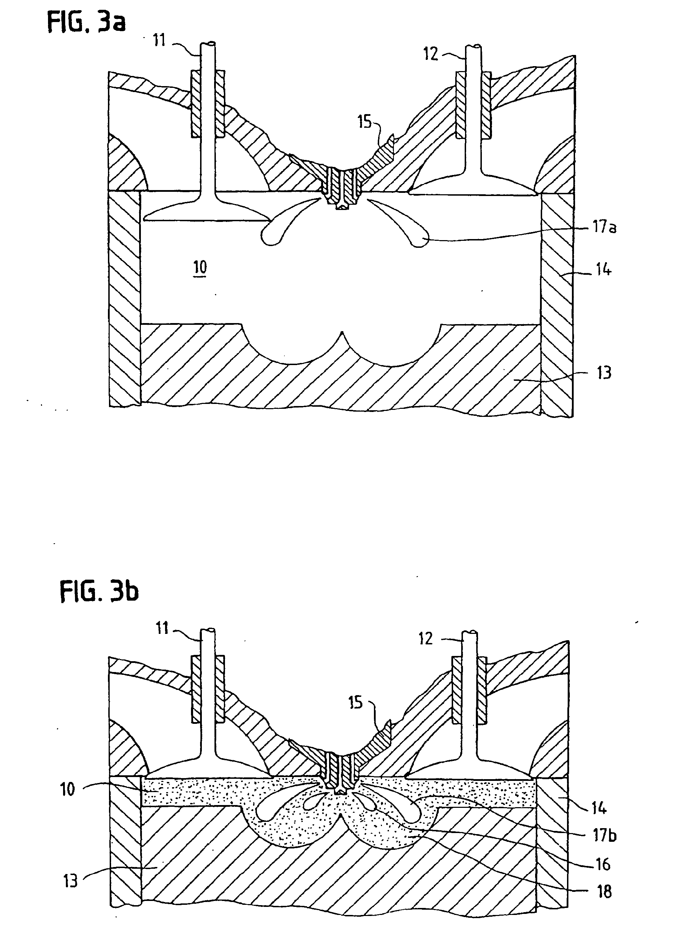

FIG. 3, which comprises FIGs. 3a and 3b, depicts partial cross section views of an engine combustion chamber, showing the sequential injection of fuel into the combustion chamber under high load conditions. FIG. 3a depicts a portion of the main fuel being injected into the combustion chamber during the intake stroke, and FIG. 3b depicts the injection of a pilot fuel and the remainder of the main fuel when the piston is at or near top dead center, near the end of the compression stroke.

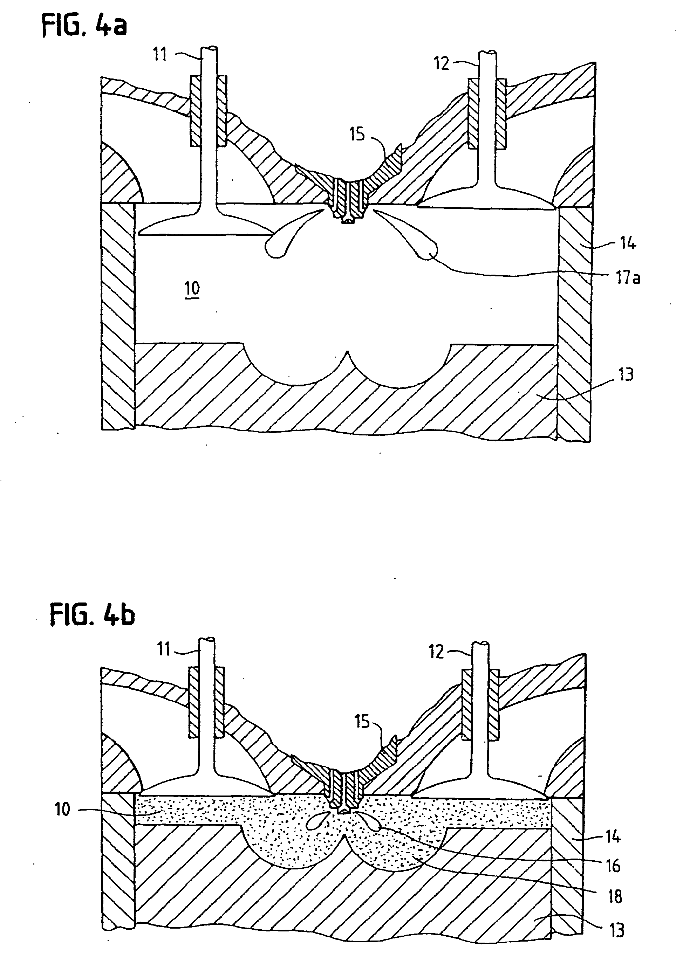

FIG. 4, which comprises FIGs. 4a and 4b, depicts partial cross section views of an engine combustion chamber, showing the sequential injection of fuel into the combustion chamber under intermediate load conditions. FIG. 4a depicts the main fuel being injected into the combustion chamber during the intake stroke, and FIG. 4b depicts the injection of a pilot fuel during the compression stroke when piston is at or near top dead center.

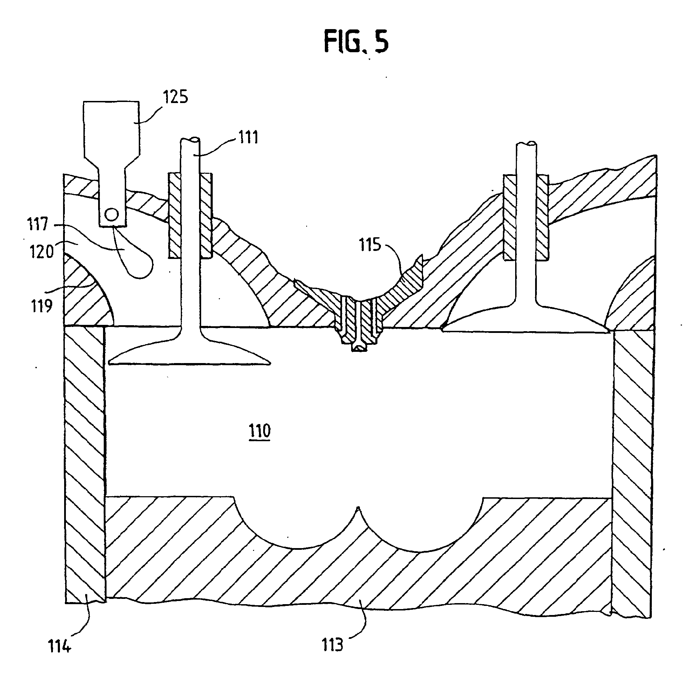

FIG. 5 is a partial cross section view of a combustion engine that depicts an alternative arrangement for mixing the main fuel with the intake air. In this arrangement, instead of mixing the main fuel and intake air in the combustion chamber, they are premixed external to the combustion chamber (that is, prior to being introduced into the combustion chamber).

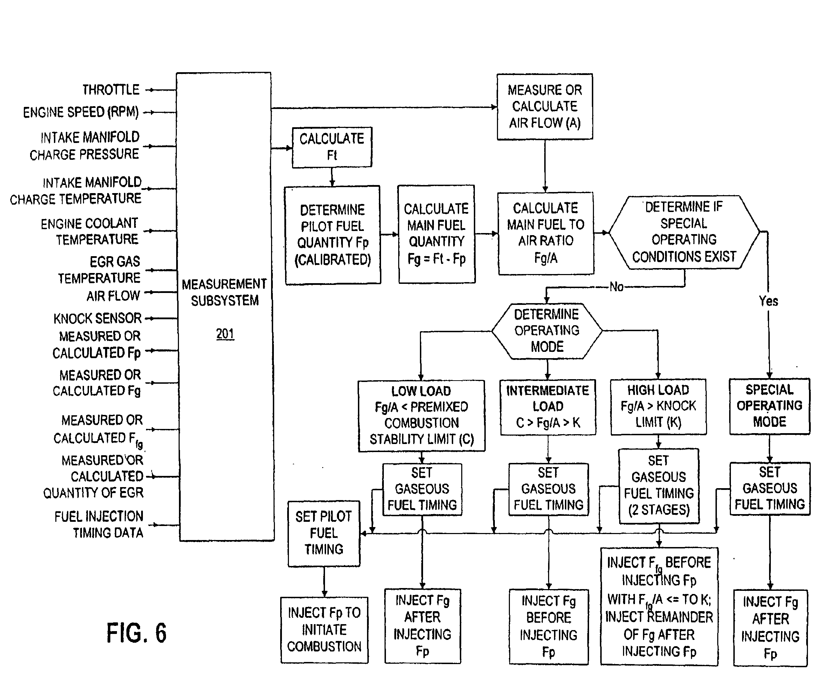

FIG. 6 is a control logic diagram that provides an example of the logic that might be employed by an electronic control unit to implement the disclosed method. In this embodiment of the method, the fuel to air ratio, which correlates to engine load, is determined and employed to select the desired operating mode.

### Detailed Description of Preferred Embodiment(s)

In the present method, fuel is injected into the combustion chamber of an internal combustion engine having at least one reciprocating piston and a crankshaft associated with the piston. The method involves two fuels, one of which is a pilot fuel, which auto-ignites more readily than the second fuel. The second fuel is preferably a gaseous fuel such as, for example, natural gas, other gaseous hydrocarbons, or hydrogen gas. The pilot fuel may be a liquid hydrocarbon fuel or a blend of liquid fuels, but in preferred embodiments, the pilot fuel is conventional diesel fuel or dimethylether.

According to the present method, the load conditions of the engine are monitored and certain sets of conditions are defined to constitute conditions when different operating modes are employed. For example, the introduction of fuel into the combustion chamber of an operating engine may be controlled differently in a low load operating mode compared to a high load operating mode.

The present method contemplates at least two operating modes. FIG. 1a is a plot of engine load against engine speed. Engine speed may be measured, for example, by measuring the speed of crankshaft rotation in rotations per minute (RPM). Engine load, measured on the vertical axis correlates to fuel to air ratio. FIG. 1a graphically illustrates two regions divided by line C determined by the "premixed combustion stability limit" of the fuel to air ratio for the engine. The premixed combustion stability limit is defined as the fuel to air ratio (F/A) at which the quantity of gaseous fuel within the piston cylinder will not support stable premixed combustion in any combustion mode. For example, the premixed combustion mode may be by flame propagation or by homogeneous charge compression ignition (HCCI). HCCI is defined herein as a combustion mode, whereby combustion of the premixed fuel occurs at many points substantially simultaneously throughout the combustion chamber with substantially no flame propagation. HCCI is believed to be primarily controlled by chemical kinetics, with turbulence inside the combustion chamber having no significant influence on this mode of combustion. Therefore, the premixed combustion stability limit is distinguished from the flammability limit defined above, in that the flammability limit is defined as the F/A at which the quantity of gaseous fuel within the piston cylinder will not support a propagation mode of combustion. Accordingly, when other modes of combustion operate when the fuel mixture is too lean to support a propagation mode of combustion, the load or F/A associated with the premixed combustion stability limit is lower than the load or F/A associated with the flammability limit. That is, by using the premixed combustion stability limit as the upper limit for low load operating region L, the extent of this region is reduced compared to the case where the flammability limit is employed as the upper limit for region L. An advantage of using the premixed combustion stability limit as the upper limit for low load operating region L, is that the extent of high load operating region H (or intermediate load operating region I in Figure 1b) is increased.

In a preferred embodiment, there are three operating modes that correspond to predefined low, intermediate, and high load conditions. These three regions are graphically depicted in FIG. 1b. The horizontal axis again represents engine speed (that is, crankshaft rotation), measured in revolutions per minute (RPM), and the vertical axis, in this case, indicates fuel to air ratio, which is a parameter that correlates to the load on the engine. The fuel to air ratio increases with engine load for a fixed engine speed. Region L represents a low load region, region I represents an area of intermediate load conditions, and region H represents an area corresponding to high load conditions .

The plots depicted in FIG. 1 (FIGs. 1a and 1b) show only the general shape of predefined regions that correspond to different operating modes. Persons skilled in the art involved here will understand that the actual numerical values for RPM and load or fuel to air ratio depend upon the individual characteristics of a particular engine design (for example, the size of the cylinder bore, the length of the stroke, the compression ratio, the shape of the combustion chamber, or the type of fuel). That is, engines of different design may have different regional boundaries between operating modes. The numerical values and the shape of the boundary line for a specific engine supplied with specific fuels may be determined empirically or theoretically.

With reference to FIG. 1a, when the engine load requires a fuel to air ratio that is below the premixed combustion stability limit (that is, line C), this generally corresponds to a set of load conditions under which a low load operating mode is employed.

FIG. 2 illustrates a preferred method of introducing fuel into combustion chamber 10 when a low load operating mode is employed. Intake valve 11 and exhaust valve 12 are closed and piston 13 is at or near top dead center in piston cylinder 14. At this time, the power stroke is initiated by the introduction of pilot fuel 16 through injector 15. Since there is an "ignition delay" between the introduction of pilot fuel 16 and actual ignition and combustion, pilot fuel 16 is preferably introduced just before piston 13 reaches top dead center. For example, pilot fuel 16 may be introduced between fifty degrees before top dead center and twenty degrees after top dead center (measured by degrees of crankshaft rotation). The actual timing within this range may be set with consideration to measured operating parameters such as engine speed. For example, as engine speed increases, pilot fuel 16 may be introduced into combustion chamber 10 earlier in the engine cycle so that combustion after the ignition delay will substantially coincide with when piston 13 is at or near top dead center.

Main fuel 17 is preferably introduced into combustion chamber 10 sequentially, that is, after the introduction of pilot fuel 16. However, as shown in FIG. 2, pilot fuel 16 and main fuel 17 may also be introduced simultaneously, for example, by commencing pilot and main fuel introduction simultaneously, or by overlapping fuel introduction (that is, introducing pilot fuel 16 first, but then introducing main fuel 17 while pilot fuel 16 is still being injected). Whether or not there is an overlap may depend, for example, upon engine speed and/or the quantity of fuel that is needed to satisfy the engine load. For example, as engine speed and the quantity of fuel increase, there may be more of an overlap.

According to the preferred method, when the low load operating mode is employed, main fuel 17 is not well mixed with the intake air and main fuel 17 bums in a diffusion mode. In the low load operating mode, less mixing is desirable to improve combustibility since the overall fuel to air ratio is below the premixed combustion stability limit. Accordingly, in this mode, main fuel 17 is more concentrated and ignitable near the injector where pilot fuel is burning. Unlike with conventional methods that introduce gaseous fuel with the intake air, there is no need to restrict the quantity of air that is drawn into the combustion chamber to ensure the combustibility of the fuel. Consequently, when the disclosed low load operating mode is employed, there are no parasitic pressure losses caused by restricting the flow through the air intake.

Like a conventional direct injection engine, compression of the intake air raises its temperature such that at the end of the compression stroke, the pressure and temperature within combustion chamber 10 is sufficient to ignite pilot fuel 16 after it is introduced (that is, after the ignition delay). The ignition of pilot fuel 16 ensures the ignition of main fuel 17. The quantities of pilot fuel 16 and main fuel 17 introduced in the low load operating mode may be adjusted depending upon the calculated total fuel requirement which is determined from the detected load conditions on the engine operating at a particular speed.

FIG. 3 illustrates a preferred method of introducing fuel into combustion chamber 10 when a high load operating mode is employed. The high load operating mode introduces fuel to combustion chamber 10 in three stages. In the first stage, depicted in FIG. 3a, piston 13 is moving away from injector 15 during the intake stroke. Intake air is drawn into cylinder 14 through open intake valve 11. In the first stage, main fuel 17a is also introduced into cylinder 14 where it mixes with the intake air. In an alternative embodiment (not shown), first stage main fuel introduction may be timed to occur when piston 13 is at bottom dead center or during the compression stroke, when piston 13 is moving towards injector 15 and intake valve 11 is closed. However, delaying first stage main fuel introduction reduces the opportunity for main fuel 17a to mix with the intake air. Accordingly, if the first stage is timed to occur during the compression stroke, it is preferable for it to occur during the early part of the compression stroke, when piston 13 is near bottom dead center.

The quantity of fuel introduced during the first stage is limited to reduce the likelihood of knocking. The maximum fuel to air ratio sustainable without causing knocking is referred to as the engine's knock limit. By limiting the quantity of fuel that is introduced during the first stage so that the fuel to air ratio is less than the knock limit, there is no need to reduce the compression ratio and the engine's cycle efficiency may be maintained.

The second stage pilot fuel introduction preferably occurs during the compression stroke when piston 13 is near top dead center, as shown in FIG. 3b. Similar parameters are considered, as with the introduction of pilot fuel in the low load operating mode. That is, parameters such as engine speed should be taken into account to set the timing of the pilot fuel injection to allow for the ignition delay. Preferably, ignition is coordinated with about the time when piston 13 is at or near top dead center. At the beginning of the power stroke, first stage main fuel 17a injected earlier in the engine cycle has mixed with intake air to form substantially homogenous fuel-air mixture 18. When pilot fuel 16 auto-ignites in combustion chamber 10, combustion of pilot fuel 16 ensures combustion of fuel-air mixture 18. Because the fuel-air mixture 18 is substantially homogenous and lean, the combustion of fuel and air mixture 18 yields benefits of at least a portion of the combustion being "lean burn homogeneous combustion" (that is, resulting in reduced emissions of NOₓ and particulate matter).

Since the quantity of main fuel introduced in the first stage was limited to prevent knocking, however, if more fuel is needed to satisfy the engine load requirements during high load conditions, an additional quantity of main fuel 17b is introduced in the third stage.

Similar to the low load operating mode, pilot fuel 16 and third stage main fuel 17b may also be injected simultaneously or in an overlapping manner. However, in the preferred method, the third stage occurs sequentially after and spaced by at least five degrees of crankshaft rotation from the second stage pilot fuel introduction. In FIG. 3b, piston 13 is moving away from injector 15, propelled by the combustion of fuel in combustion chamber 10. The third stage preferably occurs no later than the early part of the power stroke, since introduction of additional fuel early in the power stroke has a greater effect than if it is added later. The third stage main fuel introduction is preferably completed before the crankshaft connected to piston 13 has rotated more than ninety degrees beyond the point when pilot fuel 16 was introduced.

Because main fuel 17b is introduced at the end of the compression stroke or during the power stroke, it does not have an opportunity to thoroughly mix with the air in combustion chamber 10. Accordingly, third stage main fuel 17b burns in substantially a diffusion mode of combustion. Since the quantity of fuel introduced in the first stage is limited by the engine's knock limit, during high load conditions, engine power output is controlled by adjusting the quantity of main fuel 17b introduced during the third stage.

When the main fuel is a fuel such as natural gas or hydrogen gas, and the pilot fuel is diesel fuel, introducing an additional charge of main fuel in the third stage increases the proportion of main fuel that may be employed to satisfy engine requirements under high load conditions. In a preferred embodiment of the high load operating mode, the quantity of pilot fuel 16 represents about 1-15 % of the total quantity of fuel on an energy basis, with main fuel 17a and 17b providing the balance.

Accordingly, the disclosed method of introducing main fuel and pilot fuel in three stages during high load conditions reduces the likelihood of knocking, provides efficient operation by utilizing both a lean premixed mode of combustion and a diffusion mode of combustion. An advantage of using the premixed combustion stability limit as the lower limit for high load operation (see FIG. 1a) or the lower limit for intermediate load operation (see FIG. 1b) is that this allows the engine to benefit from more lean burn homogeneous combustion (and reduced emissions) compared to the case when the flammability limit is used as this lower limit. This method also maintains high engine power output while reducing NOₓ and particulate matter emissions compared to conventional methods of operation.

With some engines it may also be desirable to define an intermediate operating mode in addition to the low and high operating modes. For example, an intermediate operating mode may be selected when load conditions are within region I in FIG. 1b. In a preferred embodiment, the line between region I and region L is defined by the premixed combustion stability limit (C) and the line between region I and region H is defined by the knock limit (K).

FIG. 4 illustrates a method of introducing fuel into combustion chamber 10 when an intermediate load operating mode is employed. The intermediate load operating mode introduces fuel to combustion chamber 10 in two stages. In this mode, the fuel to air ratio is higher than the premixed combustion stability limit and lower than the knock limit, so all of main fuel 17a may be introduced into combustion chamber 10 during the first stage, depicted in FIG. 4a. Within this operating mode, the quantity of main fuel 17a introduced into combustion chamber 10 may be adjusted in response to engine load.

In FIG. 4a, piston 13 is moving away from injector 15 during the intake stroke. Intake air is drawn into cylinder 14 through open intake valve 11. Early introduction of main fuel 17a into cylinder 14 allows all of main fuel 17a to mix with the intake air during the remainder of the intake stroke and the whole of the compression stroke. In an alternate method, similar to the first stage of the high load operating mode, main fuel introduction may be timed to occur during the compression stroke (not shown), when piston 13 is moving towards injector 15 and intake valve 11 is closed. However, as described above, delaying first stage main fuel introduction reduces the opportunity for main fuel 17a to mix with the intake air. Accordingly, if the first stage is timed to occur during the compression stroke, it is preferable for it to occur during the early part of the compression stroke, when piston 13 is near bottom dead center.

As depicted in FIG. 4b, the second stage occurs during the compression stroke, timed so that pilot fuel 16 ignites after the ignition delay, substantially when piston 13 is at or near top dead center at the beginning of the power stroke. When piston 13 reaches top dead center, at the beginning of the power stroke, first stage main fuel 17a has mixed with intake air to form substantially homogenous fuel-air mixture 18. When pilot fuel 16 auto-ignites in combustion chamber 10, the combustion of pilot fuel 16 and fuel-air mixture 18 begins. Because, in the intermediate load operating mode, all of the main fuel is well mixed with air in mixture 18, it provides the full benefits of "lean burn homogeneous combustion" (that is, reduced emissions of NOₓ and particulate matter).

FIG. 5 depicts an alternative arrangement for introducing main fuel 117 into cylinder 114 during the intake stroke when the intermediate or high load operating modes are employed. Rather than mixing gaseous main fuel 117 and air 120 in cylinder 114, auxiliary injector 125 introduces main fuel 117 into the air induction system so that main fuel 117 mixes with air 120 before being drawn into combustion chamber 110. FIG. 5 depicts, for example, main fuel 117 being introduced into air induction passage 119 (that is, an air intake manifold). However, persons skilled in the art will appreciate that auxiliary injector 125 may also be located further upstream in the air induction system. Such premixing is known as "fumigation". The fuel-air mixture is then introduced to combustion chamber 110 during the intake stroke. The introduction of the mixture may be controlled by any known means, such as, for example, intake valve 111. Compression of the mixture, the pilot fuel injection phase, combustion, and subsequent introduction of additional main fuel (if any), proceed through injector 115, as depicted and explained above with reference to FIGs. 3b or 4b, depending upon whether it is a high load or an intermediate load condition.

For engines that comprise a plurality of pistons, a plurality of auxiliary injectors may be employed, or auxiliary injector 125 may be located further upstream in the air induction system to serve all of the pistons.

In a preferred embodiment, the proportion of main fuel to pilot fuel and the timing for introducing fuel into the engine's combustion chamber is determined by an electronic control unit (ECU). FIG. 6 is a control logic diagram that depicts the logic that such an ECU may be programmed to follow.

With reference to FIG. 6, a measurement subsystem 201 may be used to collect data relating to current operating conditions. In a preferred embodiment, measurement subsystem 201 collects data relating to the throttle position and the engine speed. Measurement subsystem 201 may optionally provide additional data, such as intake manifold charge temperature, engine coolant temperature, intake manifold charge pressure, air flow, and information that indicates the occurrence of knocking.

For example, the ECU preferably receives data indicating the measured throttle position and uses this data to calculate, on an energy basis, the total amount of fuel (Ft) required to satisfy the current engine load. The ECU then determines the desired quantity of pilot fuel (Fp), which may be obtained, for example, from a look-up table that has been calibrated for the engine. The quantity of main fuel (Fg) is then easily calculated (that is, Fg = Ft - Fp).

Meanwhile, the ECU may also receive data from measurement subsystem 201 that indicates the current air flow (A), or data that the ECU can use to calculate A. With Fg and A known, ECU can calculate the main fuel to air ratio (that is, Fg/A).

In the preferred embodiment, measurement subsystem 201 also sends data to the ECU indicating the current engine speed. Accordingly, with Fg/A and engine speed known, the ECU can determine the desired operating mode, by referring, for example, to a look-up table that stores information similar to that depicted in FIG. 1. In the preferred embodiment, a low load operating mode is selected if Fg/A is less than the premixed combustion stability limit (C), a high load operating mode is selected if Fg/A is greater than the knock limit (K), and an intermediate operating mode is selected if Fg/A is greater than C and less than K. The ECU may also determine whether a special operating condition, such as, for example, engine start up or idling exists. A special operating mode may be selected for the corresponding special operating condition.

After the desired operating mode is selected, the timing is set for introducing the fuel into the combustion chamber. As described above, timing and the sequence of main fuel and pilot fuel injection depends upon the selected operating mode. In addition, the specific timing within an operating mode may also be dictated by engine speed and the quantity of fuel to be injected. Accordingly, after the ECU determines the desired operating mode, main fuel and pilot fuel injection timing is set. Finally, the main fuel and pilot fuel are injected into the combustion chamber at the appropriately set times.

In an embodiment where the measurement subsystem detects the occurrence of knocking, the ECU may recalibrate its stored values in its memory to re-calibrate the value for knock limit K to prevent the re-occurrence of knocking. That is, if knocking is detected during a high load operating mode, the ECU may re-calibrate itself to reduce the quantity of main fuel (F_{fg}) that is introduced during the first stage. If knocking is detected during an intermediate load operating mode, the ECU may prevent the re-occurrence of knocking by re-calibrating itself to select the high load operating mode the next time the same load conditions are encountered.

The ECU may also recalibrate the premixed combustion stability limit and knock limit to compensate for changes in intake manifold pressure and temperature. Alternatively, the intake manifold temperature and pressure may be monitored and adjusted to maintain substantially constant values for predetermined operating conditions.

As used herein, the term "throttle" or "throttle position" has been used in a general sense to convey the load request on the engine. Typically, such a load request is set by the user and may be a foot pedal placement (in the case of a vehicular engine) or a predetermined load request (in the case of a stationary energy generating engine). In general, there are many ways in which a user may set the load request and the term "throttle" (as used in this application) should be understood in this general sense.

Although the present description is directed to four-stroke engines, those skilled in the art involved here will understand that the present dual fuel injection method can also be applied to other engine types such as, for example, two-stroke combustion engines.

## Claims

1. A method of introducing fuel into a combustion chamber of an operating internal combustion engine having at least one cylinder with a piston, wherein said fuel comprises a main fuel and a pilot fuel that is more auto-ignitable than said main fuel, said method **characterized by**;
(a) detecting a set of load conditions on said engine,
(b) employing a low load operating mode when a first predetermined set of load conditions is detected, said first predetermined set of load conditions corresponding to load conditions that exist when the desired ratio of said main fuel to air is less than a calibrated premixed combustion stability limit of a homogeneous mixture of said main fuel and intake air, and employing a high load operating mode when a second predetermined set of load conditions is detected, wherein at an operable engine speed as measured in the form of crankshaft revolutions per minute (RPM), said second set of load conditions corresponds to an engine load that is greater than the engine load corresponding to said first predetermined set of load conditions;
(c) in said low load operating mode, introducing said pilot fuel and said main fuel into said combustion chamber when said cylinder is pressurized, when said piston is at or near top dead center,
(d) in said high load operating mode, introducing said pilot fuel and said main fuel into said combustion chamber in three sequential stages, whereby a first portion of said main fuel is introduced in a first stage during an intake or compression stroke, said pilot fuel is introduced in a second stage during said compression stroke so that it ignites when the said piston is at or near top dead center, and a second portion of said main fuel is introduced in a third stage.

2. The method of claim 1 wherein said low load operating mode further comprises introducing said pilot fuel during said compression stroke in a timed manner such that said pilot fuel ignites when said piston is at or near top dead center, and said main fuel is introduced sequentially after said pilot fuel.

3. The method of claim 2 wherein, when at least a portion of said main fuel is introduced sequentially after said pilot fuel, said at least a portion of said main fuel is introduced within zero and ninety degrees of crankshaft rotation after the introduction of said pilot fuel.

4. The method of claim 1 wherein said first stage main fuel introduction is completed before said second stage pilot fuel introduction has commenced.

5. The method of claim 1 wherein said first stage main fuel is introduced during said intake stroke.

6. The method of claim 1 wherein said first stage main fuel is introduced when said piston is at or near bottom dead center.

7. The method of claim 1 wherein said second stage pilot fuel is introduced when said piston is at or near top dead center near the end of said compression stroke.

8. The method of claim 1 wherein said second stage pilot fuel introduction is completed before said third stage main fuel introduction is commenced.

9. The method of claim 1 wherein said third stage main fuel is introduced at least about five degrees of crankshaft rotation after the completion of said second stage pilot fuel introduction.

10. The method of claim 1, further comprising:
(e) employing an intermediate load operating mode when a third predetermined set of load conditiom is detected, wherein at an operable engine speed, said third predetermined set of load conditions to an engine load that is greater than the engine load corresponding to said first predetearmined set of load conditions and said third predetennined set of load conditions corresponds to an engine load that is less than the engine load corresponding to said second predetermined set of load conditions;
wherein said intermediate load operating mode comprises sequentially introducing said pilot and said main fuel into said combustion chamber, whereby said main fuel is introduced into said combustion chamber before said pilot fuel and said pilot fuel introduction occurs when said piston is at or near top dead center, and the main fuel introduction is timed such that said pilot fuel ignites substantially when said piston is at or near top dead center.

11. The method of 10 wherein, when said intermediate load operating mode is employed, said main fuel is introduced in a manner such that a substantial quantity of said main fuel intermixes with air within said cylinder prior to combustion.

12. The method of 10 wherein when said intermediate load operating mode is employed, said main fuel is introduced into said combustion chamber during an intake stroke.

13. The method of claim 10 wherein the boundary between said intermediate load operating mode and said high load operating mode is defined by a calibrated knock limit.

14. The method of claim 1 wherein the quantity of said main fuel introduced during said third stage is variable and dependent upon said detected set of load conditions such that the quantity of said main fuel introduced during said third stage increases when said detected set of load conditions indicates that engine load is increasing.

15. The method of claim 14 wherein the quantity of said main fuel introduced during said first stage is variable and dependent upon said detected set of load conditions and a calibrated knock limit such that the quantity of main fuel introduced during said first stage maintains a main fuel to air ratio that is less than said knock limit.

16. The method of claim 14 wherein the quantity of said main fuel introduced during said first stage is substantially constant and provides a main fuel to air ratio that is less than a calibrated knock limit.

17. The method of claim 1 wherein detecting said set of load conditions on said engine comprises measuring engine speed and engine throttle position.

18. The method of claim 1 wherein detecting said set of load conditions on said engine comprises measuring engine intake manifold charge temperature and/or engine coolant temperature.

19. The method of claim 1 wherein detecting said set of load conditions on said engine comprises measuring intake manifold charge pressure.

20. The method of claim 1 wherein detecting said set of load conditions on said engine comprises measuring air flow into said combustion chamber.

21. The method of claim 1 wherein detecting said set of load conditions on said engine comprises sensing knocking within said cylinder.

22. The method of claim 1 wherein said first stage main fuel is premixed with intake air prior to being introduced into said combustion chamber.

23. The method of claim 10 wherein, during said intermediate load operating mode, said main fuel is mixed with intake air prior to being introduced into said combustion chamber.

24. The method of claim 1 further comprising defining a predetermined main fuel to pilot fuel ratio (Fg/Fp) dependent upon the detected set of load conditions on said engine and introducing quantities of main fuel and pilot fuel to said combustion chamber in accordance with said predetermined Fg/Fp ratio.

25. The method of claim 24 wherein the quantity of main fuel introduced during said first stage (F_{fg}) in said high load operating mode is limited to prevent die fuel to air ratio (F_{fg}/A) from exceeding a calibrated knock limit.

26. The method of claim 1 further comprising employing a control system to control the timing for introducing said main fuel and said pilot fuel into said combustion chamber in accordance with said detected set of load conditions.

27. The method of claim 1 wherein said main fuel is gaseous.

28. The method of claim 27 wherein said main fuel is selected from the group consisting gaseous hydrogen and gaseous hydrocarbons.

29. The method of claim 28 wherein said gaseous hydrocarbons comprise natural gas and liquefied petroleum gas.

30. The method of claim 1 wherein said pilot fuel is liquid.

31. The method of claim 30 wherein said pilot fuel is a liquid hydrocarbon.

32. The method of claim 31 wherein said liquid hydrocarbons are selected from the group consisting of diesel fuel and dimethylether.

33. The method of claim 1 wherein said engine provides power to a vehicle or said engine is a power generating component of a stationary power plant.

34. The method of claim 1 further comprising operating in a special operating mode during predetennined special conditions when it is not possible to efficiently combust a premixture of fuel and an intake charge.

35. The method of claim 34 wherein said special conditions comprise engine start-up and engine idling conditions.

36. The method of claim 34 when said special operating mode is the same as said low load operating mode.

37. The method of claim 1 further comprising increasing intake manifold charge temperature above ambient temperature when said high load operating mode is employed.

38. The method of claim 37 further comprising using exhaust gas recirculation to increase the temperature of the intake charge.

39. The method of claim 10 further comprising increasing the intake manifold charge temperature above ambient temperature when said intermediate load operating mode is employed.

40. The method of claim 1 wherein said first predetermined set of load conditions correspond to load conditions that exist when the desired ratio of said main fuel to air is less than a calibrated flammability limit of a homogeneous mixture of said main fuel and intake air.

41. A method of operating an internal combustion engine wherein said method injects into a combustion chamber a main fuel and a pilot fuel that is more auto-ignitable than said main fuel, said method **characterized by**:
(a) detecting a set of engine operating conditions and desired engine load;
(b) calculating total fuel required on a energy basis to satisfy desired engine load;
(c) selecting a predetermined pilot fuel quantity based upon said total fuel required;
(d) calculating required main fuel quantity on an energy basis, as an amount equal to said total fuel required less said predetermined amount of pilot fuel;
(e) determining air flow from said set of engine operating conditions;
(f) calculating ratio of main fuel to air based upon required main fuel quantity and said determined air flow;
(g) determining if a special condition exists;
(h) selecting a special operating mode if said special operating condition exists, whereby, when said special operating mode is selected, main fuel and pilot fuel timing are set so that pilot fuel is injected to initiate combustion and said main fuel is injected after injecting said pilot fuel;
(i) if a special operating condition does not exist, said method comprising:
selecting a low load operating mode if said ratio ofmain fuel to air is less than a predetermined premixed combustion stability limit (C), whereby when said low load operating mode is selected, main fuel injection timing and pilot fuel timing are set so that pilot fuel is injected to initiate combustion and said main fuel is injected after injecting said pilot fuel; and
selecting a high load operating mode if said ratio of main fuel to air is greater than C, whereby when said high load operating mode is selected, said main fuel is injected in two stages, with a first portion of said main fuel introduced before injecting said pilot fuel, said pilot fuel is injected to initiate combustion, and a second portion of main fuel injected after injecting said pilot fuel.

42. The method of claim 41 further comprising selecting an intermediate operating mode when said main fuel to air ratio is greater than C and less than a calibrated knock limit, whereby when said intermediate operating mode is selected, said main fuel is injected before injecting said pilot fuel and said pilot fuel is injected to initiate combustion.

43. An apparatus for introducing fuel into a combustion chamber (10; 110) of an operating internal combustion engine having at least one cylinder (14; 114) with a piston (13; 113) associated therewith, said fuel comprising a main fuel (17; 117) and a pilot fuel (16; 116) that is auto-ignitable to a degree greater than said main fuel, said apparatus **characterized by**:
(a) measuring devices for collecting operational data from said engine, wherein said measuring devices comprise a tachometer for measuring engine speed and a sensor for determining throttle position;
(b) an electronic control unit (201) that receives said operational data and processes said data to compute a set of load conditions, said electronic control unit comprising memory for storing control sets of load conditions and predetermined operating modes for said control sets of load conditions, said electronic control unit matching said computed set of load conditions with said control sets of load conditions to select one of said predetermined operating modes;
(c) a main fuel (17; 117) injector controlled by said electronic control unit to introduce said main fuel into said combustion chamber at times and in quantities determined by said electronic control unit in accordance with said predetermined operating modes and said set of load conditions; and
(d) a pilot fuel (16; 116) injector controlled by said electronic control unit to introduce said pilot fuel into said combustion chamber at times and in quantities determined by said electronic control unit in accordance with said predetermined operating modes and said set of load conditions;
wherein said predetermined operating modes comprise a low load operating mode when said pilot fuel and said main fuel are introduced into said combustion chamber when said cylinder is pressurized; and a high load operating mode that comprises a three stage sequential introduction of fuel into said combustion chamber, whereby a first portion of said main fuel is introduced in a first stage, said pilot fuel is introduced in a second stage, and a second portion of said main fuel is introduced in a third stage.

44. The apparatus of claim 43 wherein said measuring devices further comprise a probe for measuring engine intake air temperature.

45. The apparatus of claim 43 wherein said measuring devices further comprise a probe for measuring engine coolant temperature.

46. The apparatus of claim 43 wherein said measuring devices further comprise a device for measuring intake air boost pressure.

47. The apparatus of claim 43 wherein said measuring devices further comprise a flow meter for measuring air flow into said combustion chamber.

48. The apparatus of claim 43 wherein said measuring devices further comprise a device for detecting pre-mature detonation within said combustion chamber.

49. The apparatus of claim 48 wherein said electronic control unit may reduce the quantity of said main fuel introduced in said first stage when pre-mature detonation is detected,

50. The apparatus of claim 43 wherein said main fuel injector and said pilot fuel injector are integrated into a dual fuel injector that may inject each one of said main fuel and said pilot fuel independently from the other.

51. The apparatus of claim 43 further comprising an auxiliary injector associated with an air induction system for introducing main fuel into an air induction passage so that it may mix with intake air prior to being introduced to said combustion chamber.

52. The apparatus of claim 51 wherein said air induction passage is an air induction manifold.

53. The apparatus of claim 51 wherein said engine comprises a plurality of pistons and a plurality of auxiliary injectors.

## Patentansprüche

1. Verfahren zum Einbringen von Kraftstoff in eine Verbrennungskammer eines in Betrieb stehenden Verbrennungsmotors, der zumindest einen Zylinder mit einem Kolben aufweist, wobei der Kraftstoff einen Hauptkraftstoff und einen Pilotkraftstoff aufweist, welcher selbstentzündlicher als der Hauptkraftstoff ist, wobei das Verfahren durch Folgendes **gekennzeichnet** ist:
(a) Feststellen eines Satzes von Belastungsbedingungen auf den Motor;
(b) Einsetzen eines Betriebsmodus mit niedriger Belastung, wenn ein erster vorbestimmter Satz von Belastungsbedingungen festgestellt wird, wobei der erste vorbestimmte Satz von Belastungsbedingungen Belastungsbedingungen entspricht, die vorhanden sind, wenn das gewünschte Verhältnis des Hauptkraftstoffs zur Luft geringer als eine kalibrierte vorgemischte Verbrennungsstabilitätsgrenze eines homogenen Gemischs des Hauptkraftstoffs und der Ansaugluft ist, und Einsetzen eines Betriebsmodus mit hoher Belastung, wenn ein zweiter vorbestimmter Satz von Belastungsbedingungen festgestellt wird, wobei der zweite vorbestimmte Satz von Belastungsbedingungen bei einer wie in der Form von Kurbelwellenumdrehungen pro Minute (U/min) gemessenen betriebsfähigen Motorgeschwindigkeit einer Motorbelastung entspricht, die größer als die Motorbelastung ist, welche dem ersten vorbestimmten Satz von Belastungsbedingungen entspricht:
(c) Einbringen, im Betriebsmodus mit niedriger Belastung, des Pilotkraftstoffs und des Hauptkraftstoffs in die Verbrennungskammer, wenn der Zylinder mit Druck beaufschlagt wird, wenn sich der Kolben am oder nahe dem oberen Totpunkt befindet:
(d) Einbringen, im Betriebsmodus mit hoher Belastung, des Pilotkraftstoffs und des Hauptkraftstoffs in drei aufeinander folgenden Stufen in die Verbrennungskammer, wobei ein erster Anteil des Hauptkraftstoffs in einer ersten Stufe während eines Ansaug- oder Verdichtungstakts eingebracht wird, der Pilotkraftstoff in einer zweiten Stufe während des Verdichtungstakts eingebracht wird, so dass er sich entzündet, wenn sich der Kolben am oder nahe dem oberen Totpunkt befindet, und ein zweiter Anteil des Hauptkraftstoffs in einer dritten Stufe eingebracht wird.

2. Verfahren nach Anspruch 1, wobei der Betriebsmodus mit niedriger Belastung ferner das Einbringen des Pilotkraftstoffs während des Verdichtungstakts in einer zeitgesteuerten Weise umfasst, so dass sich der Pilotkraftstoff entzündet, wenn sich der Kolben am oder nahe dem oberen Totpunkt befindet, und der Hauptkraftstoff aufeinander folgend nach dem Pilotkraftstoff eingebracht wird.

3. Verfahren nach Anspruch 2, wobei, wenn zumindest ein Anteil des Hauptkraftstoffs aufeinander folgend nach dem Pilotkraftstoff eingebracht wird, dieser zumindest eine Anteil des Hauptkraftstoffs innerhalb von null und neunzig Grad der Kurbelwellendrehung nach der Einbringung des Pilotkraftstoffs eingebracht wird.

4. Verfahren nach Anspruch 1, wobei die Hauptkraftstoffeinbringung der ersten Stufe abgeschlossen ist, bevor die Pilotkraftstoffeinbringung der zweiten Stufe begonnen hat.

5. Verfahren nach Anspruch 1, wobei der Hauptkraftstoff der ersten Stufe während des Ansaugtakts eingebracht wird.

6. Verfahren nach Anspruch 1, wobei der Hauptkraftstoff der ersten Stufe eingebracht wird, wenn sich der Kolben am oder nahe dem unteren Totpunkt befindet.

7. Verfahren nach Anspruch 1, wobei der Pilotkraftstoff der zweiten Stufe eingebracht wird, wenn sich der Kolben nahe dem Ende des Verdichtungstakts am oder nahe dem oberen Totpunkt befindet.

8. Verfahren nach Anspruch 1, wobei die Pilotkraftstoffeinbringung der zweiten Stufe abgeschlossen ist, bevor die Hauptkraftstoffeinbringung der dritten Stufe begonnen wird.

9. Verfahren nach Anspruch 1, wobei der Hauptkraftstoff der dritten Stufe bei zumindest etwa fünf Grad der Kurbelwellendrehung nach dem Abschluss der Pilotkraftstoffeinbringung der zweiten Stufe eingebracht wird.

10. Verfahren nach Anspruch 1, ferner umfassend
(e) Einsetzen eines Betriebsmodus mit Zwischenbelastung, wenn ein dritter vorbestimmter Satz von Belastungsbedingungen festgestellt wird, wobei der dritte vorbestimmte Satz von Belastungsbedingungen bei einer betriebsfähigen Motorgeschwindigkeit einer Motorbelastung entspricht, die größer als die Motorbelastung ist, welche dem ersten vorbestimmten Satz von Belastungsbedingungen entspricht, und der dritte vorbestimmte Satz von Belastungsbedingungen einer Motorbelastung entspricht, die geringer als die Motorbelastung ist, welche dem zweiten vorbestimmten Satz von Belastungsbedingungen entspricht:
wobei der Betriebsmodus mit Zwischenbelastung ein aufeinander folgendes Einbringen des Pilot- und des Hauptkraftstoffs in die Verbrennungskammer umfasst, wobei der Hauptkraftstoff vor dem Pilotkraftstoff in die Verbrennungskammer eingebracht wird und die Pilotkraftstoffeinbringung stattfindet, wenn sich der Kolben am oder nahe dem oberen Totpunkt befindet, und die Hauptkraftstoffeinbringung so zeitgesteuert ist, dass sich der Pilotkraftstoff im Wesentlichen entzündet, wenn sich der Kolben am oder nahe dem oberen Totpunkt befindet.

11. Verfahren nach Anspruch 10, wobei, wenn der Betriebsmodus mit Zwischenbelastung eingesetzt wird, der Hauptkraftstoff in einer solchen Weise eingebracht wird, dass sich eine wesentliche Menge des Hauptkraftstoffs im Zylinder vor der Verbrennung mit Luft vermischt.

12. Verfahren nach Anspruch 10, wobei, wenn der Betriebsmodus mit Zwischenbelastung eingesetzt wird, der Hauptkraftstoff während eines Ansaugtakts in die Verbrennungskammer eingebracht wird.

13. Verfahren nach Anspruch 10, wobei die Grenze zwischen dem Betriebsmodus mit Zwischenbelastung und dem Betriebsmodus mit hoher Belastung durch eine kalibrierte Klopfgrenze definiert ist.

14. Verfahren nach Anspruch 1, wobei die Menge des Hauptkraftstoffs, die während der dritten Stufe eingebracht wird, veränderlich ist und vom festgestellten Satz von Belastungsbedingungen abhängt, so dass die Menge des Hauptkraftstoffs, die während der dritten Stufe eingebracht wird, zunimmt, wenn der festgestellte Satz von Belastungsbedingungen anzeigt, dass die Motorbelastung zunimmt.

15. Verfahren nach Anspruch 14, wobei die Menge des Hauptkraftstoffs, die während der ersten Stufe eingebracht wird, veränderlich ist und vom festgestellten Satz von Belastungsbedingungen und einer kalibrierten Klopfgrenze abhängt, so dass die Menge des Hauptkraftstoffs, die während der ersten Stufe eingebracht wird, ein Hauptkraftstoff-Luft-Verhältnis aufrechterhält, das geringer als die Klopfgrenze ist.

16. Verfahren nach Anspruch 14, wobei die Menge des Hauptkraftstoffs, die während der ersten Stufe eingebracht wird, im Wesentlichen konstant ist und ein Hauptkraftstoff-Luft-Verhältnis bereitstellt, das geringer als eine kalibrierte Klopfgrenze ist.

17. Verfahren nach Anspruch 1, wobei das Feststellen des Satzes von Belastungsbedingungen auf den Motor das Messen der Motorgeschwindigkeit und der Motordrosselstellung umfasst.

18. Verfahren nach Anspruch 1, wobei das Feststellen des Satzes von Belastungsbedingungen auf den Motor das Messen der Motoransaugkrümmerladungstemperatur und/oder der Motorkühlmitteltemperatur umfasst.

19. Verfahren nach Anspruch 1, wobei das Feststellen des Satzes von Belastungsbedingungen auf den Motor das Messen des Ansaugkrümmerladungsdrucks umfasst.

20. Verfahren nach Anspruch 1, wobei das Feststellen des Satzes von Belastungsbedingungen auf den Motor das Messen des Luftstroms in die Verbrennungskammer umfasst.

21. Verfahren nach Anspruch 1, wobei das Feststellen des Satzes von Belastungsbedingungen auf den Motor das Abfühlen des Klopfens im Zylinder umfasst.

22. Verfahren nach Anspruch 1, wobei der Hauptkraftstoff der ersten Stufe mit Ansaugluft vorgemischt wird, bevor er in die Verbrennungskammer eingebracht wird.

23. Verfahren nach Anspruch 10, wobei, während des Betriebsmodus mit Zwischenbelastung, der Hauptkraftstoff mit Ansaugluft vorgemischt wird, bevor er in die Verbrennungskammer eingebracht wird.

24. Verfahren nach Anspruch 1, ferner umfassend das Definieren eines vorbestimmten Hauptkraftstoff-Pilotkraftstoff-Verhältnisses (Fg/Fp), das vom festgestellten Satz von Belastungsbedingungen auf den Motor abhängt, und das Einbringen von Mengen des Hauptkraftstoffs und des Pilotkraftstoffs gemäß dem vorbestimmten Fg/Fp-Verhältnis in die Verbrennungskammer.

25. Verfahren nach Anspruch 24, wobei die Menge des Hauptkraftstoffs, die während der ersten Stufe (Ffg) im Betriebsmodus mit hoher Belastung eingebracht wird, begrenzt ist, um zu verhindern, dass das Kraftstoff-Luft-Verhältnis (Ffg/A) eine kalibrierte Klopfgrenze überschreitet.

26. Verfahren nach Anspruch 1, ferner umfassend das Einsetzen eines Steuersystems, um die Zeitsteuerung zum Einbringen des Hauptkraftstoffs und des Pilotkraftstoffs gemäß dem festgestellten Satz von Belastungsbedingungen in die Verbrennungskammer zu steuern.

27. Verfahren nach Anspruch 1, wobei der Hauptkraftstoff gasförmig ist.

28. Verfahren nach Anspruch 27, wobei der Hauptkraftstoff aus der Gruppe gewählt wird, die aus gasförmigen Wasserstoff und gasförmigen Kohlenwasserstoffen besteht.

29. Verfahren nach Anspruch 28, wobei die gasförmigen Kohlenwasserstoffe Erdgas und verflüssigtes Erdölgas umfassen.

30. Verfahren nach Anspruch 1, wobei der Pilotkraftstoff flüssig ist.

31. Verfahren nach Anspruch 30, wobei der Pilotkraftstoff ein flüssiger Kohlenwasserstoff ist.

32. Verfahren nach Anspruch 31, wobei die flüssigen Kohlenwasserstoffe aus der Gruppe gewählt werden, die aus Dieselkraftstoff und Dimethylether besteht.

33. Verfahren nach Anspruch 1, wobei der Motor einem Kraftfahrzeug Kraft bereitstellt oder der Motor ein krafterzeugender Bestandteil einer stationären Triebwerkanlage ist.

34. Verfahren nach Anspruch 1, ferner umfassend das Betreiben in einem Sonderbetriebsmodus während vorbestimmter Sonderbedingungen, wenn es nicht möglich ist, ein Vorgemisch aus Kraftstoff und einer Ansaugladung leistungsfähig zu verbrennen.

35. Verfahren nach Anspruch 34, wobei die Sonderbedingungen Motoranfahr- und Motorleer laufbedingungen umfassen.

36. Verfahren nach Anspruch 34, wobei der Sonderbetriebsmodus der gleiche wie der Betriebsmodus bei niedriger Belastung ist.

37. Verfahren nach Anspruch 1, ferner umfassend das Erhöhen der Ansaugkrümmerladungstemperatur über die Umgebungstemperatur, wenn der Betriebsmodus mit hoher Belastung eingesetzt wird.

38. Verfahren nach Anspruch 37, ferner umfassend das Verwenden einer Abgasrück führung, um die Temperatur der Ansaugladung zu erhöhen.

39. Verfahren nach Anspruch 10, ferner umfassend das Erhöhen der Ansaugkrümmer ladungstemperatur über die Umgebungstemperatur, wenn der Betriebsmodus mit Zwischenbelastung eingesetzt wird.

40. Verfahren nach Anspruch 1, wobei der erste vorbestimmte Satz von Belastungsbedingungen Belastungsbedingungen entspricht, die vorhanden sind, wenn das gewünschte Verhältnis des Hauptkraftstoffs zur Luft geringer als eine kalibrierte Entflammbarkeitsgrenze eines homogenen Gemischs des Hauptkraftstoffs und der Ansaugluft ist.

41. Verfahren zum Betreiben eines Verbrennungsmotors, wobei das Verfahren einen Hauptkraftstoff und einen Pilotkraftstoff, der selbstentzündlicher als der Hauptkraftstoff ist, in eine Verbrennungskammer einspritzt, wobei das Verfahren durch Folgendes **gekennzeichnet** ist:
(a) Feststellen eines Satzes von Motorbetriebsbedingungen und einer gewünschten Motorbelastung;
(b) Berechnen des Gesamtkraftstoffs, der auf einer Energiebasis benötigt wird, um der gewünschten Motorbelastung nachzukommen:
(c) Auswählen einer vorbestimmen Pilotkraftstoffmenge auf Basis des benötigten Gesamtkraftstoffs:
(d) Berechnen der benötigten Hauptkraftstoffmenge auf einer Energiebasis als eine Menge, die dem benötigten Gesamtkraftstoff weniger der vorbestimmten Menge des Pilotkraftstoffs gleich ist:
(e) Bestimmen des Luftstroms aus dem Satz von Motorbetriebsbedingungen;
(f) Berechnen des Verhältnisses des Hauptkraftstoffs zur Luft auf Basis der benötigten Hauptkraftstoffmenge und des bestimmten Luftstroms;
(g) Bestimmen, ob eine Sonderbedingung vorhanden ist:
(h) Auswählen eines Sonderbetriebsmodus, wenn die Sonderbetriebsbedingung vorhanden ist, wobei, wenn die Sonderbetriebsbedingung gewählt wird, die Hauptkraftstoff- und die Pilotkraftstoffsteuerung so festgelegt werden, dass Pilotkraftstoff eingespritzt wird, um die Verbrennung einzuleiten, und Hauptkraftstoff nach dem Einspritzen des Pilotkraftstoffs eingespritzt wird;
(i) wobei das Verfahren dann, wenn keine Sonderbetriebsbedingung vorhanden ist, Folgendes umfasst:
Auswählen eines Betriebsmodus mit niedriger Belastung, wenn das Verhältnis des Hauptkraftstoffs zur Luft geringer als eine vorbestimmte vorgemischte Verbrennungsstabilitätsgrenze (C) ist, wodurch, wenn der Betriebsmodus mit niedriger Belastung ausgewählt wird, die Hauptkraftstoffeinspritzungssteuerung und die Pilotkraftstoffsteuerung so festgelegt werden, dass Pilotkraftstoff eingespritzt wird, um die Verbrennung einzuleiten, und Hauptkraftstoff nach dem Einspritzen des Pilotkraftstoffs eingespritzt wird; und
Auswählen eines Betriebsmodus mit hoher Belastung, wenn das Verhältnis des Hauptkraftstoffs zur Luft gröBer als C ist, wodurch, wenn der Betriebsmodus mit hoher Belastung ausgewählt wird, der Hauptkraftstoff in zwei Stufen eingespritzt wird, wobei ein erster Anteil des Hauptkraftstoffs vor dem Einspritzen des Pilotkraftstoffs eingebracht wird, der Pilotkraftstoff eingespritzt wird, um die Verbrennung einzuleiten, und ein zweiter Anteil des Hauptkraftstoffs nach dem Einspritzen des Pilotkraftstoffs eingespritzt wird.

42. Verfahren nach Anspruch 41, ferner umfassend das Auswählen eines Zwischenbetriebsmodus, wenn das Hauptkraftstoff-Luft-Verhältnis größer als C und geringer als eine kalibrierte Klopfgrenze ist, wodurch, wenn der Zwischenbetriebsmodus ausgewählt wird, der Hauptkraftstoff vor dem Einspritzen des Pilotkraftstoffs eingespritzt wird, und der Pilotkraftstoff eingespritzt wird, um die Verbrennung einzuleiten.

43. Vorrichtung zum Einbringen von Kraftstoff in eine Verbrennungskammer (10; 110) eines in Betrieb stehenden Verbrennungsmotors, der zumindest einen Zylinder (14; 114) mit einem zugehörigen Kolben (13; 113) aufweist, wobei der Kraftstoff einen Hauptkraftstoff (17; 117) und einen Pilotkraftstoff (16; 116) umfasst, welcher zu einem größeren Grad als der Hauptkraftstoff selbstentzündlich ist, wobei die Vorrichtung durch Folgendes **gekennzeichnet** ist:
(a) Messvorrichtungen zum Sammeln von Betriebsdaten vom Motor, wobei die Messvorrichtungen ein Tachometer zum Messen der Motorgeschwindigkeit und einen Sensor zum Bestimmen der Drosselstellung umfassen;
(b) eine elektronische Steuereinheit (201), die die Betriebsdaten erhält und die Daten verarbeitet, um einen Satz von Belastungsbedingungen zu berechnen, wobei die elektronische Steuereinheit einen Speicher zum Speichern von Steuersätzen von Belastungsbedingungen und vorbestimmten Betriebsmodi für die Steuersätze von Belastungsbedingungen umfasst, wobei die elektronische Steuereinheit den berechneten Satz von Belastungsbedingungen mit den Steuersätzen von Belastungsbedingungen vergleicht, um einen der vorbestimmten Betriebsmodi auszuwählen;
(c) eine Hauptkraftstoff(17; 117)Einspritzdüse, die durch die elektronische Steuerung gesteuert wird, um den Hauptkraftstoff zu Zeiten und in Mengen, die durch die elektronische Steuereinheit gemäß den vorbestimmten Betriebsmodi und dem Satz von Belastungsbedingungen bestimmt werden, in die Verbrennungskammer einzubringen: und
(d) eine Pilotkraftstoff(16; 116)Einspritzdüse, die durch die elektronische Steuerung gesteuert wird, um den Pilotkraftstoff zu Zeiten und in Mengen, die durch die elektronische Steuereinheit gemäß den vorbestimmten Betriebsmodi und dem Satz von Belastungsbedingungen bestimmt werden in die Verbrennungskammer einzubringen;
wobei die vorbestimmten Betriebsmodi einen Betriebsmodus mit niedriger Belastung umfassen, wobei der Pilotkraftstoff und der Hauptkraftstoff in die Verbrennungskammer eingebracht werden, wenn der Zylinder mit Druck beaufschlagt wird, und einen Betriebsmodus mit hoher Belastung umfassen, der eine dreistufige aufeinander folgende Einbringung von Kraftstoff in die Verbrennungskammer umfasst, wobei ein erster Anteil des Hauptkraftstoffs in einer ersten Stufe eingebracht wird, der Pilotkraftstoff in einer zweiten Stufe eingebracht wird, und ein zweiter Anteil des Hauptkraftstoffs in einer dritten Stufe eingebracht wird.

44. Vorrichtung nach Anspruch 43, wobei die Messvorrichtungen ferner eine Sonde zum Messen der Motoransauglufttemperatur umfassen.

45. Vorrichtung nach Anspruch 43, wobei die Messvorrichtungen ferner eine Sonde zum Messen der Motorkühlmitteltemperatur umfassen.

46. Vorrichtung nach Anspruch 43, wobei die Messvorrichtungen ferner eine Vorrichtung zum Messen des Ansaugluftladedrucks umfassen.

47. Vorrichtung nach Anspruch 43, wobei die Messvorrichtungen ferner einen Durchflussmesser zum Messen des Luftstroms in die Verbrennungskammer umfassen.

48. Vorrichtung nach Anspruch 43, wobei die Messvorrichtungen ferner eine Vorrichtung zum Feststellen einer verfrühten Explosion in der Verbrennungskammer umfassen.

49. Vorrichtung nach Anspruch 48, wobei die elektronische Steuereinheit die Menge des Hauptkraftstoffs, der in der ersten Stufe eingebracht wird, verringern kann, wenn eine verfrühte Explosion festgestellt wird.

50. Vorrichtung nach Anspruch 43, wobei die Hauptkraftstoffeinspritzdüse und die Pilotkraftstoffeinspritzdüse zu einer Doppelkraftstoffeinspritzdüse zusammengefasst sind, die jeden aus dem Hauptkraftstoff und dem Pilotkraftstoff unabhängig vom anderen einspritzen kann.

51. Vorrichtung nach Anspruch 43, ferner umfassend eine Hilfseinspritzdüse, die einem Lufteinsaugsystem zugehörig ist, um Hauptkraftstoff in einen Lufteinsaugdurchgang einzubringen, damit er sich mit Ansaugluft vermischen kann, bevor er in die Verbrennungskammer eingebracht wird.

52. Vorrichtung nach Anspruch 51, wobei der Lufteinsaugdurchgang ein Lufteinsaugkrümmer ist.

53. Vorrichtung nach Anspruch 51, wobei der Motor mehrere Kolben und mehrere Hilfseinspritzdüsen umfasst.

## Revendications

1. Procédé d'introduction d'un carburant dans une chambre de combustion d'un moteur à combustion interne en marche, ayant au moins un cylindre avec un piston, dans lequel ledit carburant comprend un carburant principal et un carburant pilote qui peut s'enflammer automatiquement plus que ledit carburant principal, ledit procédé étant **caractérisé par** :
(a) la détection d'un ensemble de conditions de charge sur ledit moteur ;
(b) l'emploi d'un mode de fonctionnement sous faible charge, lorsqu'un premier ensemble de conditions de charge est détecté, ledit premier ensemble prédéterminé de conditions de charge correspondant aux conditions de charge qui existent lorsque le rapport souhaité entre ledit carburant principal et l'air est inférieur à une limite de stabilité de combustion prémélangée d'un mélange homogène dudit carburant principal et de l'air d'admission, et l'emploi d'un mode de fonctionnement sous charge élevée, lorsqu'un deuxième ensemble prédéterminé de conditions de charge est détecté, dans lequel, pour un régime de moteur pouvant fonctionner comme mesuré sous la forme de tours par minute (tr/min) du vilebrequin, ledit deuxième ensemble de conditions de charge correspond à une charge de moteur qui est supérieure à la charge du moteur correspondant audit premier ensemble prédéterminé de conditions de charge ;
(c) dans ledit mode de fonctionnement sous faible charge, l'introduction dudit carburant pilote et dudit carburant principal dans ladite chambre de combustion, lorsque ledit cylindre est mis sous pression, lorsque ledit piston est au niveau du point mort haut ou proche du point mort haut ;
(d) dans ledit mode de fonctionnement sous charge élevée, l'introduction dudit carburant pilote et dudit carburant principal dans ladite chambre de combustion en trois étapes séquentielles, moyennant quoi une première partie dudit carburant principal est introduite, au cours d'une première étape, lors de la course d'admission et de compression, ledit carburant pilote est introduit, au cours d'une deuxième étape, lors de ladite course de compression, de telle sorte qu'il s'enflamme lorsque ledit piston est au niveau du point mort haut ou proche du point mort haut, et une deuxième partie dudit carburant principal est introduite au cours d'une troisième étape.

2. Procédé selon la revendication 1, dans lequel ledit mode de fonctionnement sous faible charge comprend en outre l'introduction dudit carburant pilote, lors de la course de compression, de façon synchronisée, de telle sorte que ledit carburant pilote s'enflamme lorsque ledit piston est au niveau du point mort haut ou proche du point mort haut, et ledit carburant principal est introduit, de façon séquentielle, après ledit carburant pilote.

3. Procédé selon la revendication 2, dans lequel, lorsqu'au moins une partie dudit carburant principal est introduite, de façon séquentielle, après ledit carburant pilote, ladite au moins une partie dudit carburant principal est introduite lorsque le vilebrequin a pivoté de zéro à quatre-vingt dix degrés après l'introduction dudit carburant pilote.

4. Procédé selon la revendication 1, dans lequel l'introduction dudit carburant principal de la première étape, est terminée avant que ne débute l'introduction du carburant, au cours de la deuxième étape.

5. Procédé selon la revendication 1, dans lequel ledit premier carburant principal de la première étape est introduit lors de ladite course d'admission.

6. Procédé selon la revendication 1, dans lequel ledit premier carburant principal de la première étape est introduit lorsque ledit piston est au niveau du point mort bas ou proche du point mort bas.

7. Procédé selon la revendication 1, dans lequel ledit carburant pilote de la deuxième étape est introduit, lorsque ledit piston est au niveau du point mort haut ou proche du point mort haut, vers la fin de ladite course de compression.

8. Procédé selon la revendication 1, dans lequel ladite introduction du carburant pilote de la deuxième étape est terminée avant que ne débute l'introduction dudit carburant principal de la troisième étape.

9. Procédé selon la revendication 1, dans lequel ledit carburant principal de la troisième étape est introduit lorsque le vilebrequin a pivoté d'au moins cinq degrés, après l'achèvement de l'introduction dudit carburant pilote de la deuxième étape.

10. Procédé selon la revendication 1, comprenant en outre :
(e) l'emploi d'un mode de fonctionnement sous charge intermédiaire, lorsqu'un troisième ensemble prédéterminé de conditions de charge est détecté, dans lequel, pour un régime du moteur pouvant fonctionner, ledit troisième ensemble prédéterminé de conditions de charge correspond à une charge du moteur qui est supérieure à la charge du moteur correspondant audit premier ensemble prédéterminé de conditions de charge et ledit troisième ensemble prédéterminé de conditions de charge correspond à une charge du moteur qui est inférieure à la charge du moteur correspondant audit deuxième ensemble prédéterminé de conditions de charge ;
dans lequel ledit mode de fonctionnement sous charge intermédiaire comprend l'introduction, de façon séquentielle, dudit carburant pilote et dudit carburant principal dans ladite chambre de combustion, moyennant quoi ledit carburant principal est introduit dans ladite chambre de combustion avant que l'introduction dudit carburant pilote et dudit carburant principal n'ait lieu, lorsque ledit piston est au niveau du point mort haut ou proche du point mort haut, et l'introduction du carburant principal est synchronisée de telle sorte que ledit carburant pilote s'enflamme sensiblement, lorsque ledit piston est au niveau du point mort haut ou proche du point mort haut.

11. Procédé selon la revendication 10, dans lequel on emploie ledit mode de fonctionnement sous charge intermédiaire, ledit carburant principal est introduit d'une manière telle qu'une quantité substantielle dudit carburant principal se mélange à l'air à l'intérieur dudit cylindre avant la combustion.

12. Procédé selon la revendication 10, dans lequel ledit mode de fonctionnement sous charge intermédiaire est employé, ledit carburant principal est introduit dans ladite chambre de combustion lors d'une course d'admission.

13. Procédé selon la revendication 10, dans lequel la limite entre ledit mode de fonctionnement sous charge intermédiaire et ledit mode de fonctionnement sous charge élevée est définie par une limite de résistance à la détonation étalonnée.

14. Procédé selon la revendication 1, dans lequel la quantité dudit carburant principal introduit lors de ladite troisième étape est variable et dépend dudit ensemble détecté de conditions de charge, de telle sorte que la quantité dudit carburant principal introduit lors de ladite troisième étape augmente lorsque ledit ensemble détecté de conditions de charge indique que la charge du moteur est croissante.

15. Procédé selon la revendication 14, dans lequel la quantité dudit carburant principal introduit au cours de ladite première étape est variable et dépend dudit ensemble détecté de conditions de charge et d'une limite de résistance à la détonation, de telle sorte que la quantité du carburant principal introduit au cours de ladite première étape maintient un rapport carburant principal/air, qui est inférieur à ladite limite de résistance à la détonation.

16. Procédé selon la revendication 14, dans lequel la quantité dudit carburant principal introduit au cours de ladite première étape est sensiblement constante et fournit un rapport carburant principal/air qui est inférieur à une limite de résistance à la détonation étalonnée.

17. Procédé selon la revendication 1, dans lequel la détection dudit ensemble de conditions de charge sur ledit moteur comprend la mesure du régime du moteur et de la position du papillon des gaz du moteur.

18. Procédé selon la revendication 1, dans lequel la détection dudit ensemble de conditions de charge sur ledit moteur comprend la mesure de la température de charge de la tubulure d'admission du moteur et/ou de la température du liquide de refroidissement du moteur.

19. Procédé selon la revendication 1, dans lequel la détection dudit ensemble de conditions de charge sur ledit moteur comprend la mesure de la pression de charge de la tubulure d'admission.

20. Procédé selon la revendication 1, dans lequel la détection dudit ensemble de conditions de charge sur ledit moteur comprend la mesure de l'écoulement d'air dans ladite chambre de combustion.

21. Procédé selon la revendication 1, dans lequel la détection dudit ensemble de conditions de charge sur ledit moteur comprend la détection de la résistance à la détonation à l'intérieur dudit cylindre.

22. Procédé selon la revendication 1, dans lequel ledit carburant de la première étape est prémélangé avec l'air d'admission, avant d'être introduit dans ladite chambre de combustion.

23. Procédé selon la revendication 10, dans lequel, dans ledit mode de fonctionnement sous charge intermédiaire, ledit carburant principal est mélangé à l'air d'admission avant d'être introduit dans ladite chambre de combustion.

24. Procédé selon la revendication 1, comprenant en outre la définition d'un rapport prédéterminé entre le carburant principal et le carburant pilote (Fg/Fp), dépendant de l'ensemble détecté de conditions de charge sur ledit moteur, et l'introduction de quantités du carburant principal et du carburant pilot dans ladite chambre de combustion, selon ledit rapport prédéterminé Fg/Fp.

25. Procédé selon la revendication 24, dans lequel la quantité de carburant principal introduit au cours de ladite première étape (F_{fg}), dans ledit mode de fonctionnement sous charge élevée, est limitée pour empêcher que le rapport du carburant à l'air (F_{fg}/A) ne dépasse une limite de résistance à la détonation étalonnée.

26. Procédé selon la revendication 1, comprenant en outre l'emploi d'un système de contrôle pour contrôler la synchronisation pour l'introduction dudit carburant principal et dudit carburant pilote dans ladite chambre de combustion, selon ledit ensemble détecté de conditions de charge.

27. Procédé selon la revendication 1, dans lequel ledit carburant principal est gazeux.

28. Procédé selon la revendication 27, dans lequel ledit carburant principal est choisi dans le groupe constitué d'hydrogène gazeux et d'hydrocarbures gazeux.

29. Procédé selon la revendication 28, dans lequel lesdits hydrocarbures gazeux comprennent du gaz naturel et du gaz de pétrole liquéfié.

30. Procédé selon la revendication 1, dans lequel ledit carburant pilote est liquide.

31. Procédé selon la revendication 30, dans lequel ledit carburant pilote est un hydrocarbure liquide.

32. Procédé selon la revendication 31, dans lequel lesdits hydrocarbures liquides sont choisis dans le groupe constitué de carburant diesel et d'éther diméthylique.

33. Procédé selon la revendication 1, dans lequel ledit moteur fournit de l'énergie à un véhicule ou ledit moteur est un composant générant l'énergie d'un groupe motopropulseur stationnaire.

34. Procédé selon la revendication 1, comprenant en outre le fonctionnement, dans un mode de fonctionnement spécial, au cours des conditions spéciales prédéterminées, lorsqu'il n'est pas possible de réaliser efficacement la combustion d'un prémélange de carburant et d'une charge d'admission.

35. Procédé selon la revendication 34, dans lequel lesdites conditions spéciales comprennent le démarrage du moteur et les conditions de ralenti du moteur.

36. Procédé selon la revendication 34, dans lequel ledit mode de fonctionnement spécial est le même que ledit mode de fonctionnement sous faible charge.

37. Procédé selon la revendication 1, comprenant en outre l'augmentation de la température de charge de la tubulure d'admission, au-dessus de la température ambiante, lorsqu'on emploie ledit mode de fonctionnement sous charge élevée.

38. Procédé selon la revendication 37, comprenant en outre l'utilisation de la recirculation des gaz d'échappement pour augmenter la température de la charge d'admission.

39. Procédé selon la revendication 10, comprenant en outre l'augmentation de la température de charge de la tubulure d'admission, au-dessus de la température ambiante, lorsqu'on emploie ledit mode de fonctionnement sous charge intermédiaire.

40. Procédé selon la revendication 1, dans lequel ledit premier ensemble prédéterminé de conditions de charge correspond aux conditions de charge qui existent lorsque le rapport souhaité entre ledit carburant principal et l'air est inférieur à celui d'une limite d'inflammabilité étalonnée d'un mélange homogène dudit carburant principal et de l'air d'admission.

41. Procédé de fonctionnement d'un moteur à combustion interne, dans lequel ledit procédé injecte dans une chambre de combustion un carburant principal et un carburant pilote qui peut s'enflammer automatiquement plus que ledit carburant principal, ledit procédé étant **caractérisé par** :
(a) la détection d'un ensemble de conditions de fonctionnement du moteur et de la charge souhaitée du moteur ;
(b) le calcul du carburant total requis en fonction de l'énergie pour satisfaire la charge souhaitée du moteur ;
(c) la sélection d'une quantité prédéterminée de carburant pilote, en fonction dudit carburant total requis ;
(d) le calcul de la quantité requise de carburant principal en fonction de l'énergie, selon une quantité égale audit carburant total requis moins ladite quantité prédéterminée de carburant pilote ;
(e) la détermination de l'écoulement d'air à partir desdites conditions de fonctionnement du moteur ;
(f) le calcul du rapport entre le carburant principal et l'air, en fonction de la quantité requise de carburant principal et ledit écoulement d'air déterminé ;
(g) la détermination de l'existence d'une condition spéciale ;
(h) la sélection d'un mode de fonctionnement spécial si ladite condition de fonctionnement spéciale existe, moyennant quoi, lorsque ledit mode de fonctionnement spécial est sélectionné, la distribution du carburant principal et du carburant pilote est établie de telle sorte que le carburant pilote est injecté pour initier la combustion et ledit carburant principal est injecté après l'injection dudit carburant pilote ;
(i) si une condition de fonctionnement spéciale n'existe pas, ledit procédé comprend :
la sélection d'un mode de fonctionnement sous faible charge, si ledit rapport entre le carburant principal et l'air est inférieur à une limite de stabilité de la combustion prémélangée prédéterminée (C), moyennant quoi, lorsque ledit mode de fonctionnement sous faible charge est sélectionné, la synchronisation de l'injection du carburant principal et du carburant pilote est établie, de telle sorte que le carburant pilote est injecté pour initier la combustion, et que ledit carburant principal est injecté après l'injection dudit carburant pilote ; et
la sélection d'un mode de fonctionnement sous charge élevée, si ledit rapport entre le carburant principal et l'air est supérieur à C, moyennant quoi, lorsque ledit mode de fonctionnement sous charge élevée est sélectionné, ledit carburant principal est injecté en deux étapes, une première partie dudit carburant principal étant introduite avant l'injection dudit carburant pilote, ledit carburant pilote est injecté pour initier la combustion, et une deuxième partie du carburant principal est injecté après injection dudit carburant pilote.

42. Procédé selon la revendication 41, comprenant en outre la sélection d'un mode de fonctionnement intermédiaire, lorsque ledit rapport entre le carburant principal et l'air est supérieur à C et inférieur à la limite de résistance à la détonation étalonnée, moyennant quoi, lorsque ledit mode de fonctionnement intermédiaire est sélectionné, ledit carburant principal est injecté avant l'injection dudit carburant pilote et ledit carburant pilote est injecté pour initier la combustion.

43. Appareil d'introduction du carburant dans une chambre de combustion (10 ; 110) d'un moteur à combustion interne ayant au moins un cylindre (14 ; 114) avec un piston (13 ; 113) associé à celui-ci, ledit carburant comprenant un carburant principal (17 ; 117) et un carburant pilote (16 ; 116) qui peut s'enflammer automatiquement à un degré supérieur à celui dudit carburant principal, ledit appareil étant **caractérisé par** :
(a) la mesure des dispositifs pour collecter des données opérationnelles à partir dudit moteur, où lesdits dispositifs de mesure comprennent un tachymètre, permettant de mesurer le régime du moteur, et un capteur, permettant de déterminer la position du papillon des gaz ;
(b) une unité de contrôle électronique (201) qui reçoit lesdites données opérationnelles et les traite pour calculer un ensemble de conditions de charge, ladite unité de contrôle électronique comprend une mémoire permettant de stocker les ensembles de contrôle de conditions de charge et les modes de fonctionnement prédéterminés pour lesdits ensembles de contrôle des conditions de charge, ladite unité de contrôle électronique faisant correspondre ledit ensemble calculé de conditions de charge avec lesdits ensembles de contrôle de conditions de charge, pour sélectionner l'un desdits modes de fonctionnement prédéterminés ;
(c) un injecteur de carburant principal (17 ; 117) contrôlé par ladite unité de contrôle électronique pour introduire ledit carburant principal dans ladite chambre de combustion, à des moments et en des quantités déterminés par ladite unité de contrôle électronique, selon lesdits modes de fonctionnement prédéterminés et ledit ensemble de conditions de charge ; et
(d) un injecteur de carburant pilote (16 ; 116) contrôlé par ladite unité de contrôle électronique pour introduire ledit carburant pilote dans ladite chambre de combustion, à des moments et en des quantités déterminés par ladite unité de contrôle électronique, selon lesdits modes de fonctionnement prédéterminés et ledit ensemble de conditions de charge ;
dans lequel lesdits modes de fonctionnement prédéterminés comprennent un mode de fonctionnement sous faible charge, lorsque ledit carburant pilote et ledit carburant principal sont introduits dans ladite chambre de combustion, lorsque ledit cylindre est mis sous pression ; et un mode de fonctionnement sous charge élevée qui comprend une introduction de carburant séquentielle en trois étapes dans ladite chambre de combustion, moyennant quoi une première partie dudit carburant principal est introduite au cours d'une première étape, ledit carburant pilote est introduit au cours d'une deuxième étape, et une deuxième partie dudit carburant principal est introduit au cours d'une troisième étape.

44. Appareil selon la revendication 43, dans lequel lesdits dispositifs de mesure comprennent, en outre, une sonde pour mesurer la température de l'air d'admission du moteur.

45. Appareil selon la revendication 43, dans lequel lesdits dispositifs de mesure comprennent, en outre, une sonde pour mesurer la température du liquide de refroidissement du moteur.

46. Appareil selon la revendication 43, dans lequel lesdits dispositifs de mesure comprennent, en outre, un dispositif pour mesurer la pression de suralimentation de l'air d'admission.

47. Appareil selon la revendication 43, dans lequel lesdits dispositifs de mesure comprennent, en outre, un débitmètre pour mesurer l'écoulement d'air dans ladite chambre de combustion.

48. Appareil selon la revendication 43, dans lequel lesdits dispositifs de mesure comprennent, en outre, un dispositif pour détecter la détonation anticipée, à l'intérieur de ladite chambre de combustion.

49. Appareil selon la revendication 48, dans lequel ladite unité de contrôle électronique peut réduire la quantité introduite dudit carburant principal, au cours de ladite première étape, lorsqu'on détecte la détonation anticipée.

50. Appareil selon la revendication 43, dans lequel ledit injecteur de carburant principal et ledit injecteur de carburant pilote sont intégrés dans un injecteur de deux carburants, qui peut injecter séparément chacun dudit carburant principal et dudit carburant pilote.

51. Appareil selon la revendication 43, comprenant, en outre, un injecteur auxiliaire associé à un système d'induction de l'air pour introduire le carburant principal dans un passage d'induction, de telle sorte qu'il peut se mélanger à l'air d'admission, avant d'être introduit dans ladite chambre de combustion.

52. Appareil selon la revendication 51, dans lequel ledit passage d'induction de l'air est une tubulure d'induction de l'air.

53. Appareil selon la revendication 51, dans lequel ledit moteur comprend une pluralité de pistons et une pluralité d'injecteurs auxiliaires.
